# EUROPEAN PATENT APPLICATION

(11) **EP 3 766 606 A1**
(43) Date of publication of application: **20.01.2021**
(21) Application number: 19215418.5
(22) Date of filing: 11.12.2019
(51) Int. Cl.: B22F 3/105, B29C 64/153, B33Y 10/00, B33Y 30/00

(54) **WASTE PRODUCT REMOVAL SYSTEMS**

(30) Priority: 15.07.2019 US 201916511998
(71) Applicant: Hamilton Sundstrand Corporation, Charlotte, NC 28217-4578 (US)
(72) Inventor: FISHER, Brian A., West Hartford, CT 06117 (US); SKIBA, Tommy, East Hartford, CT 06118 (US)
(74) Representative: Dehns

(57) **Abstract**

A waste product removal system (100) for an additive manufacturing system (99) can include a suction nozzle (101) configured to connect to a suction source (103) for providing suction to a build area (105) of the additive manufacturing system (99). The waste product removal system (100) can include a shield (107) in operable communication with the nozzle (101) and configured to extend downward near the nozzle (101) to prevent reintroduction of the material ejection to a powder in the build area (105). The shield (107) can be configured to guide material ejection from the build area (105) to the suction nozzle (101).

## Description

### FIELD

This disclosure relates to additive manufacturing, more specifically to waste product removal systems for additive manufacturing.

### BACKGROUND

Metal additive manufactured (AM) components are composed of a very long series of very small weld beads. Each weld bead produces waste products, e.g., in the form of oxidized particles and vaporized metal, referred to as deposition products. These deposition products can cause defects or sub optimal material properties in the final part, and are not adequately addressed with current technologies.

Such conventional methods and systems have generally been considered satisfactory for their intended purpose. However, there is still a need in the art for improved waste product removal systems. The present disclosure provides a solution for this need.

### SUMMARY

A waste product removal system for an additive manufacturing system can include a suction nozzle configured to connect to a suction source for providing suction to a build area of the additive manufacturing system. The waste product removal system can include a shield in operable communication with the nozzle and configured to extend downward near the nozzle to prevent reintroduction of the material ejection to a powder in the build area. The shield can be configured to guide material ejection from the build area to the suction nozzle.

The waste product removal system can be positioned within the additive manufacturing system such that the shield is above the build area by less than about 5 mm. The waste product removal system can be positioned within the additive manufacturing system such that the shield is above the build area by about 1 mm.

The waste product removal system can further include a sweep gas outlet manifold configured to be connected to a flow source. The suction nozzle can be configured to face the sweep gas outlet manifold downstream of a melt pool, for example.

The waste product removal system can include a motive system connected to the suction nozzle and configured to position and/or orient the suction nozzle. The motive system can be configured to move the suction nozzle in two dimensions (e.g., a plurality of axes) over the build area.

The motive system can include a gantry connected to the suction nozzle, for example. In certain embodiments, the gantry can be a laser gantry configured to move a laser of the additive manufacturing system such that the suction nozzle moves with the laser.

The motive system can include a powder recoater. The suction nozzle can be connected to the recoater to move with the recoater, for example.

In certain embodiments, the motive system can include a controller configured to position and/or orient the suction nozzle as a function of a suction pressure, a scan speed, a powder material, a laser power, laser spot size, scan strategy, local part geometry, and/or detection of an ejected particle of interest. Any other suitable factors are contemplated herein.

In accordance with at least one aspect of this disclosure, an additive manufacturing system can include a laser and a build area. The additive manufacturing system can include a waste product removal system as disclosed herein, e.g., as described above.

In accordance with at least one aspect of this disclosure, a method can include removing waste product during additive manufacturing. For example, the method can include removing hot and/or cold ejection during a high energy sintering process (e.g., selective laser sintering). The method can include any other suitable method and/or portion thereof is contemplated therein.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a waste product removal system in accordance with this disclosure;
Fig. 2 is a schematic view of an embodiment of a waste product removal system in accordance with this disclosure;
Fig. 3 is a schematic view of an embodiment of a waste product removal system in accordance with this disclosure; and
Fig. 4 is a schematic plan view of an embodiment of a waste product removal system, shown having the nozzle oriented relative to a stripe direction.

### DETAILED DESCRIPTION

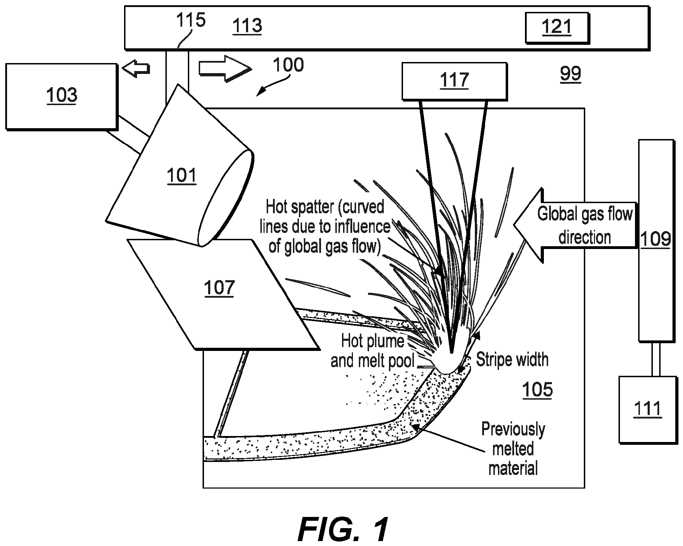

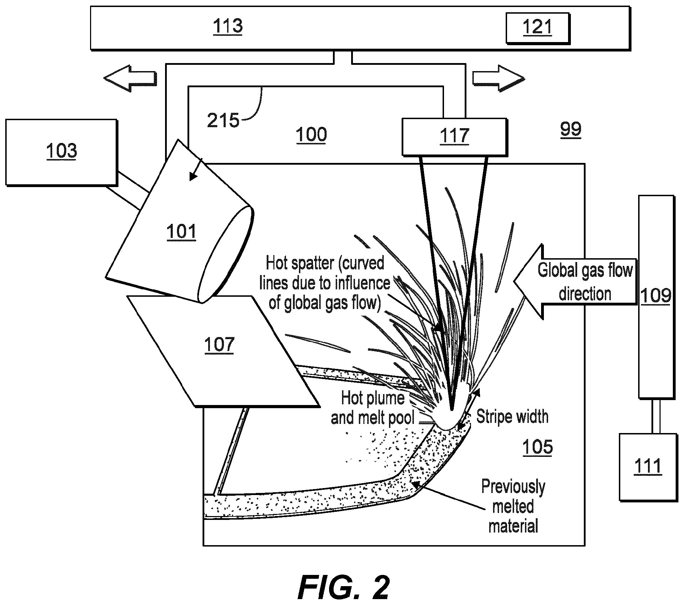

Reference will now be made to the drawings wherein like reference numerals identify similar structural features or aspects of the subject disclosure. For purposes of explanation and illustration, and not limitation, an illustrative view of an embodiment of a waste product removal system in accordance with the disclosure is shown in Fig. 1 and is designated generally by reference character 100. Other embodiments and/or aspects of this disclosure are shown in Figs. 2-4. Certain embodiments described herein can be used to remove waste products during additive manufacturing, for example.

Referring to Fig. 1, a waste product removal system 100 for an additive manufacturing system 99 (e.g., a laser powder bed fusion machine) can include a suction nozzle 101 configured to connect to a suction source 103 for providing suction to a build area 105 (e.g., a powder bed) of the additive manufacturing system 99. The system 100 can include a shield 107 in operable communication with (e.g., connected to) the nozzle 101 and configured to extend downward near (e.g., from) the nozzle 101 to prevent reintroduction of the material ejection (e.g., hot spatter, cold ejection) to a powder in the build area 105. In certain embodiments, the shield can extend in two or more dimensions (e.g., such as a bell at the end of a trumpet). The shield 107 can be configured to guide material ejection from the build area 105 to the suction nozzle 101.

In certain embodiments, the shield 107 can include a plate, e.g., made of suitable metal. The shield 107 can include any other suitable shape, e.g., a scoop shape, and can have any suitable dimensions. For example, the shield 107 can be at least a few centimeters (e.g., several inches) in length, such that the suction nozzle must be located above the build area 105 by at least a few centimeters. Any other suitable dimensions are contemplated herein.

The shield 107 can extend from the nozzle 101 at an angle in certain embodiments, e.g., as shown. Any other suitable extension is contemplated herein.

In certain embodiments, the waste product removal system 100 can be positioned within the additive manufacturing system 99 such that the shield 107 (e.g., a bottom edge thereof) is above the build area 105 by less than about 5 mm. In certain embodiments, the waste product removal system 100 can be positioned within the additive manufacturing system 99 such that the shield 107 (e.g., a bottom edge thereof) is above the build area 105 by about 1 mm. Lowering the shield 107 to the build area can provide better interaction of the shield 107 with ejection, in at least some embodiments. Ejected spatter can fly up several inches vertically (e.g., up to about 4 to 6 inches), and the shield 107 and nozzle 101 can be configured to capture such spatter.

The waste product removal system 100 can further include a sweep gas outlet manifold 109 configured to be connected to a flow source 111 (e.g., of sweep gas, e.g., argon). In certain embodiments, suction source 103 and flow source 111 can be the same device (e.g., a blower), and the suction and discharge sides can act be the nozzle 101 and manifold 109, respectively. As shown, the suction nozzle 101 can be configured to face the manifold 109 downstream of a melt pool, for example. While embodiments include a flow source for providing a flow across the build plate, certain embodiments may not include a flow source and only a suction source.

In certain embodiments, the waste product removal system 100 can include a motive system 113 connected to the suction nozzle 101 (e.g., and therefore the shield 107 as well). The motive system 113 can be configured to position and/or orient the suction nozzle 101 (e.g., and the shield 107). The motive system 113 can be configured to move the suction nozzle 101 in two dimensions (e.g., the X and Y direction as appreciated by those having ordinary skill in the art) over the build area 105, for example. Any other suitable number of dimensions (e.g., one, three) are contemplated herein.

As shown in Fig. 1, the motive system 113 can include a gantry 115 connected to the suction nozzle 101, for example. As shown, the gantry 115 can be an independent gantry for the suction nozzle 101. In certain embodiments, referring to Fig. 2, the gantry 215 can be a laser gantry 215 configured to move a laser 117 of the additive manufacturing system 99 such that the suction nozzle 101 moves with the laser 117.

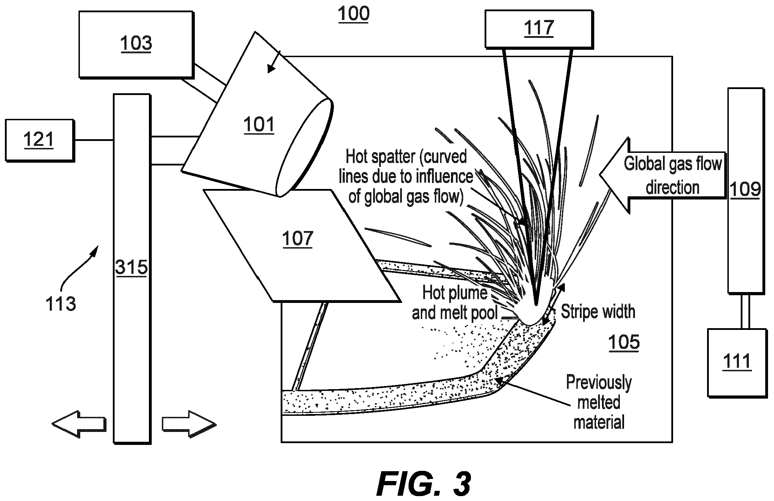

In certain embodiments, referring to Fig. 3, the motive system 113 can include a powder recoater 315. The suction nozzle 101 can be connected to the recoater 315 to move with the recoater 315, for example. It is contemplated that the suction nozzle 101 can be mounted to move relative to the recoater 315 (e.g., for 2 axis movement), or can be mounted to be fixed to the recoater 315 (e.g., for 1 axis movement).

Certain embodiments may move in up to 5 axes in order to orient appropriately relative to the melt pool. Any suitable number of axes of movement are contemplated herein. In certain embodiments, the system 100 can include a gimbal mount for the suction nozzle 101, for example, to allow the suction nozzle 101 to be oriented relative to the motive system 113 and/or the build area 105. Any suitable hardware to effect orientation of the nozzle 101 is contemplated herein.

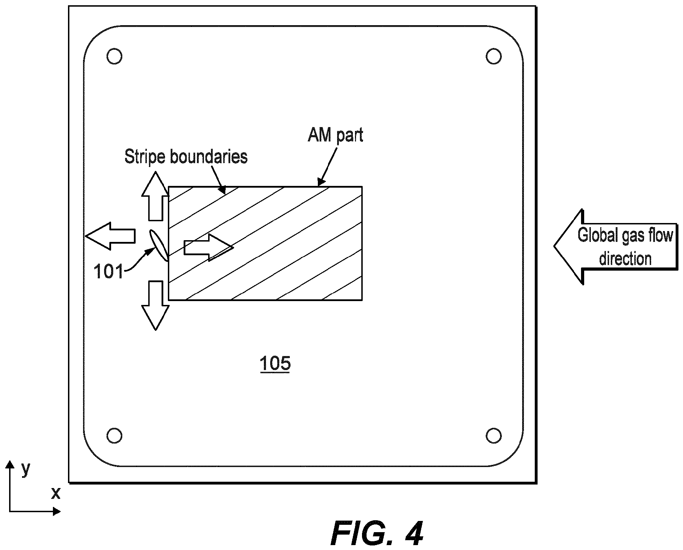

In certain embodiments, the motive system 113 can include a controller 121 configured to position and/or orient the suction nozzle 101 as a function of a suction pressure, a scan speed, a powder material, a laser power, laser spot size, scan strategy, local part geometry, and/or detection of an ejected particle of interest, for example. Any suitable factor(s) are contemplated herein. For example, as shown in Fig. 4, the controller 121 can be configured to orient the nozzle 101 to face a lengthwise direction of a stripe of a build. In certain embodiments, the stripe lines (e.g., the borders of the stripes) can be perpendicular to the scan direction of the laser 117. In certain embodiments, the motive system 113 can be configured to detect a large spatter particle and produce a reaction to move the suction nozzle 101 to capture the particle, for example.

The controller 121 can include any suitable hardware and/or software module(s), for example, configured to control the motive system 113 (e.g., the gantry position, the recoater position), e.g., as a function of the one or more factors disclosed above.

In accordance with at least one aspect of this disclosure, an additive manufacturing system 99 can include a laser 117 and a build area 105. The additive manufacturing system 99 can include a waste product removal system 100 as disclosed herein, e.g., as described above. Any other suitable components are contemplated herein (e.g., a recoater 315, a powder supply, etc.). Any suitable type of additive manufacturing system is contemplated herein (e.g., a laser powder bed fusion system).

In accordance with at least one aspect of this disclosure, a method can include removing waste product during additive manufacturing. For example, the method can include removing hot and/or cold ejection during a high energy sintering process (e.g., selective laser sintering). The method can include any other suitable method and/or portion thereof is contemplated therein.

As appreciated by those having skill in the art, if deposition products are reintroduced to the powder bed, they can compromise the structure of the built part. Embodiments can include a deposition products extraction nozzle oriented to face the flow source and downstream of the melt pool. Certain embodiments can include an independent gantry system, or to a recoater, or to a laser gantry for systems where the laser moves, for example. Embodiments can sit between a millimeter and a few centimeters from the build area (e.g., the powder bed), for example.

In embodiments, the melt pool generally moves in a back and forth pattern to create a stripe at about 1000 mm/s with a stripe width of about 10 mm and a step over distance of about 0.1 mm. This puts the stripe propagation velocity orthogonal to the laser travel direction at roughly 1/100 of the laser velocity (10 mm/s). This means that the suction nozzle only has to move at about 10 mm/s to effectively remove deposition products in certain embodiments. Thus, the nozzle can be on a gantry system independent of the other systems within the machine, attached to the mechanism used for recoating the powder, or another system, for example.

Embodiments can include the nozzle placed as close to a stripe as possible. An article can be made of a plurality of stripes assembled side by side, layer by layer, in certain processes as appreciated by those having ordinary skill in the art. In certain embodiments of processes, there are no stripes at all, and the laser can follow any path to melt the required powder into the part.

In embodiments, a laser scan direction can be perpendicular to the stripe boundaries, and can scan into the sweep gas flow (e.g., in embodiment with sweep gas) so no used particles (e.g., hot or cold ejection) can be reintroduced into the powder before being used. In embodiments, the suction nozzle can follow the stripe propagation direction and can travel in the X-Y plane or any other dimensions and/or axes.

Embodiments can include a shield/scoop to deflect spatter toward the extraction nozzle, for example. The scoop can be a separate component attached to the nozzle, for example, or can be integral with the nozzle. Embodiments can allow components to be deflected into the nozzle, and could drop down to one layer thickness above the powder, for example.

Embodiments include a mechanism to suck up the deposition products directly at the weld so that they do not obstruct the heat source for future welds and also do not fall back on the part. Embodiments can move with the location of the weld to maintain performance over a large area. Embodiments can include multiple waste product removal systems in the same build chamber of an additive manufacturing system, allowing for multiple heat sources or each targeting different types of deposition products, for example. Embodiments can combine suction with a gas jet, e.g., from a flow source, or other current technologies to aid in the removal of high momentum deposition products.

Deposition products are not currently targeted directly and are not efficiently removed. Efficient removal of deposition products generates parts with less defects. In addition, one of the current limitations of OEM supplied metal AM components is that the gas flow to blow deposition products away is not adequate to allow multiple heat sources or large build volumes, both of which are necessary for price reduction and capability improvements. Embodiments address all of those issues.

In current systems, global gas flow direction generally acts 5-25 mm above the powder bed at a velocity of about 2-3 m/s, and is used to carry away the deposition products from above the melt pool such that the laser does not get scattered by them and they do not land back onto the part. Embodiments can sit downwind of the melt pool. The nozzle shape can be optimized to the gas flow situation and type of deposition products that it is collecting. Embodiment can include many nozzles either moving on the same gantry system or independently. Embodiments can include gas jets working in concert with the suction nozzles to entrain deposition products in the gas flow from the suction nozzle. Embodiments can include panels or sheets used to deflect the deposition products toward the suction device.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure.

## Claims

1. A waste product removal system (100) for an additive manufacturing system (99), comprising:
a suction nozzle (101) configured to connect to a suction source (103) for providing suction to a build area (105) of the additive manufacturing system (99).

2. The waste product removal system of claim 1, further comprising a shield (107) in operable communication with the nozzle and configured to extend downward near the nozzle to prevent reintroduction of the material ejection to a powder in the build area.

3. The waste product removal system of claim 2, wherein the shield (107) is configured to guide material ejection from the build area to the suction nozzle.

4. The waste product removal system of claim 2, wherein the system (100) is positioned within the additive manufacturing system such that the shield is above the build area by less than about 5 mm, and preferably wherein the system is positioned within the additive manufacturing system such that the shield is above the build area by about 1 mm.

5. The waste product removal system of claim 2, further comprising a sweep gas outlet manifold (109) configured to be connected to a flow source (111), wherein the suction nozzle (101) is configured to face the sweep gas outlet manifold (109) downstream of a melt pool.

6. The waste product removal system of claim 2, further comprising a motive system (113) connected to the suction nozzle and configured to position and/or orient the suction nozzle.

7. The waste product removal system of claim 6, wherein the motive system (113) is configured to move the suction nozzle in two dimensions over the build area; and/or
wherein the motive system (113) includes a gantry (115) connected to the suction nozzle (101).

8. The waste product removal system of claim 7, wherein the gantry (115) is a laser gantry configured to move a laser of the additive manufacturing system such that the suction nozzle moves with the laser; and/or
wherein the motive system (113) includes a powder recoater (315), wherein the suction nozzle (101) is connected to the recoater to move with the recoater.

9. The waste product removal system of claim 6, wherein the motive system (113) includes a controller (121) configured to position and/or orient the suction nozzle as a function of a suction pressure, a scan speed, a powder material, a laser power, laser spot size, scan strategy, local part geometry, and/or detection of an ejected particle of interest.

10. An additive manufacturing system (99), comprising:
a laser;
a build area; and
the waste product removal system of claim 1, further comprising:
a shield connected to the nozzle and configured to extend downward from the nozzle to prevent reintroduction of the material ejection to a powder in the build area.

11. The system of claim 10, wherein the shield is configured to guide material ejection from the build area to the suction nozzle.

12. The system of claims 10 or 11, wherein the waste product removal system is positioned within the additive manufacturing system such that the shield is above the build area by less than about 5 mm, and preferably wherein the system is positioned within the additive manufacturing system such that the shield is above the build area by about 1 mm.

13. The system of any of claims 10-12, further comprising a sweep gas outlet manifold configured to be connected to a flow source, wherein the suction nozzle is configured to face the sweep gas outlet manifold downstream of a melt pool.

14. The system of any of claims 10-13, further comprising a motive system connected to the suction nozzle and configured to position and/or orient the suction nozzle, and preferably wherein the motive system is configured to move the suction nozzle in two dimensions over the build area.

15. A method, comprising:
removing waste product during additive manufacturing.
